# EUROPÄISCHE PATENTSCHRIFT

(11) **EP 1 375 936 B1**
(45) Veröffentlichungstag und Bekanntmachung des Hinweises auf die Patenterteilung: **14.04.2004**
(21) Anmeldenummer: 02019968.3
(22) Anmeldetag: 05.09.2002
(51) Int. Cl.: F16C 11/06, F16D 3/32

(54) **Doppelgelenkwelle**
Articulated shaft for double joint
Arbre articulé de joint de cardan

(30) Priorität: 19.03.2002 DE 10212243
(43) Veröffentlichungstag der Anmeldung: 02.01.2004
(73) Patentinhaber: G. Elbe & Sohn GmbH & Co. KG, 74321 Bietigheim-Bissingen (DE)
(72) Erfinder: Mondry, Siegfried, 74321 Bietigheim-Bissingen (DE); Schweizer, Frank, 74343 Sachsenheim (DE)
(74) Vertreter: Sartorius, Peter, Dipl.-Ing.

(56) Entgegenhaltungen:
- DE-A- 19 818 570
- US-A- 2 988 904
- US-A- 4 276 759
- US-A- 6 042 293

## Beschreibung

Die Erfindung bezieht sich auf eine Doppelgelenkwelle für Fahrzeuge.

Es sind allgemein Doppelgelenkwellen bekannt, die ein erstes und ein zweites Zapfenkreuz aufweisen, die über ein erstes und zweites Gabelgelenk wirkungsmäßig miteinander verbunden sind, wobei die beiden Gabelgelenke über ein Verbindungselement und eine Kugelkalotte verbunden sind. Derartige Verbindungsarten waren in der Vergangenheit sehr problematisch. Bei den bekannten Doppelgelenkwellen sind insbesondere im Bereich der Zentriereinrichtung sehr starke Verschleißerscheinungen aufgetreten, die dann auch zum Wellenbruch geführt haben.

Der Erfindung liegt die Aufgabe zugrunde, die tribologischen Eigenschaften der Gelenkwelle zu verbessern.

Gelöst wird die Aufgabe erfindungsgemäß durch folgende Merkmale:
a) die Doppelgelenkwelle weist ein erstes und ein zweites Zapfenkreuz auf,
b) die Zapfenkreuze sind in einem ersten und einem zweiten Gabelgelenk aufgenommen,
c) die beiden Gabelgelenke stehen über ein Verbindungselement in Antriebsverbindung,
d) das Verbindungselement weist am ersten Gabelgelenk eine Kugelkalotte auf, die zur Aufnahme einer Zentrierkugel dient,
e) die Zentrierkugel ist in der am Gabelgelenk vorgesehenen Kalotte aufgenommen,
f) die Gelenkkugel oder Zentrierkugel weist an ihrem Außenumfang eine oder mehrere Vertiefungen auf, die sich derart an der Oberfläche der Gelenkkugel erstrecken, dass kein Schmiermittel aus dem ersten ins Innere des ersten Gabelgelenkes reichenden Hohlraum in den zweiten außerhalb des ersten Gabelgelenkes gebildeten Hohlraum gelangt, der zumindest durch eine elastische Dichtung nach außen hin abgedichtet ist,
g) die Zentrierkugel ist mit einer Bohrung zur Aufnahme eines Zentrierzapfens versehen,
h) der mit dem zweiten Gabelgelenk fest verbunden ist,
i) die Bohrung der Zentrierkugel und/oder der Zentrierzapfen und/oder eine auf dem Zentrierzapfen vorgesehene Gleitlagerbuchse weisen eine oder mehrere Vertiefungen für Gleitmittel auf.

Hierdurch wird erreicht, dass bei Doppelgelenkwellen die Dauerfestigkeit auch für hohe Drehzahlen wesentlich verbessert und die Schmiereigenschaften zwischen den beweglichen Teilen derart gestaltet werden, dass auch bei sehr langen Laufzeiten nur ganz geringfügiger Abrieb auftritt.

Hierzu es vorteilhaft, dass die Vertiefungen der Oberfläche der Gelenkkugel bzw. Zentrierkugel auf einer Hälfte der Oberfläche der Gelenkkugel bzw. Zentrierkugel sich einenends bis zur Stirnfläche und anderenends bis in den mittleren Bereich der Oberfläche der Gelenkkugel erstrecken.

Vorteilhaft ist es auch, dass zahlreiche in etwa parallel zueinander verlaufende Vertiefungen mit etwa gleichem Abstand auf der Oberfläche der Gelenkkugel bzw. Zentrierkugel angeordnet sind und dass die Vertiefungen auf der Oberfläche der Gelenkkugel bzw. Zentrierkugel einen Winkelbereich α von ca. 20° bis 30° abdecken.

Ferner ist es vorteilhaft, dass die Vertiefungen der Oberfläche der Gelenkkugel bzw. Zentrierkugel und die Vertiefungen in der Gleitlagerbuchse über zumindest eine Versorgungsöffnung mit Schmiermittel versorgt werden. Vorteilhaft ist es hierzu auch, dass die Gleitlagerbuchse zahlreiche mit Abstand zueinander angeordnete Öffnungen oder Vertiefungen oder Fettkammern aufweist.

Durch die Verwendung einer Gleitlagerbuchse mit zahlreichen mit Abstand zueinander angeordneten Öffnungen bzw. Fettkammern kann das Schmiermittel auf einfache Weise gut zwischen die beiden zu bewegenden Teile eingebracht und somit die Gleitfähigkeit über lange Standzeiten sichergestellt werden.

Eine zusätzliche Möglichkeit ist gemäß einer Weiterbildung, dass die Kalotte an ihrer Innenoberfläche und/oder die Zentrierkugel in ihrer Bohrung und/oder auf ihrer Zentrierkugelaußenoberfläche eine oder mehrere Vertiefungen aufweist. Die an verschiedenen Stellen vorgesehenen Vertiefungen stellen eine weitere Verbesserung der erfindungsgemäßen Vorrichtung dar und gewährleisten ebenfalls, dass bei allen gegeneinander verstellbaren Teilen oder drehbaren Teilen eine gute Befettung sichergestellt wird.

Ferner ist es vorteilhaft, dass die Gleitlagerbuchse aus einem weicheren Material als die Zentrierkugel gebildet ist. Hierdurch wird ebenfalls eine Verbesserung der Standzeit der Doppelgelenkwelle erreicht.

Vorteilhaft ist es auch, dass die Gleitlagerbuchse aus Kunststoff, Stahl oder Bronze gebildet ist.

Gemäß einer bevorzugten Ausführungsform der erfindungsgemäßen Lösung ist schließlich vorgesehen, dass der Zentrierzapfen induktiv gehärtet und nach dem Härtungsvorgang angelassen ist.

Von besonderer Bedeutung ist für die vorliegende Erfindung, dass die Oberfläche der Zentrierkugel oberflächenbeschichtet und in die Oberfläche Teflonmaterial eingearbeitet ist.

Im Zusammenhang mit der erfindungsgemäßen Ausbildung und Anordnung ist es von Vorteil, dass auf der Oberfläche bzw. Außenoberfläche des Zentrierzapfens eine Metallschicht unter Plasma bei Drücken unterhalb von 5 x 10⁻¹ mbar aufgebracht ist.

Vorteilhaft ist es ferner, dass die erste Schicht bzw. Vorschicht im PVCD-Verfahren, die zweite Schicht im Aufdampfverfahren und die dritte Schicht im PVCD-Verfahren aufgebracht wird, wobei die erste zwischen der Oberfläche des Zentrierzapfens und der zweiten Schicht bzw. Metallschicht vorgesehene Vorschicht eine Schichtdicke aufweist, die weniger als 200 Å ist.

Gemäß einer weiteren Ausführungsform ist es von Vorteil, dass die Zentrierkugel drehfest mit der Buchse und/oder dem Zentrierzapfen verbunden ist.

Ferner ist es vorteilhaft, dass der Querschnitt des Zentrierzapfens und der Innendurchmesser der Bohrung der Buchse und/oder der Bohrung der Zentrierkugel unrund ist.

In weiterer Ausgestaltung der Erfindung ist es vorteilhaft, dass die Spielpaarung zwischen der Kalotte und der Kugel gleich oder kleiner ist als die Spielpaarung zwischen der Bohrung der Kugel und dem Außendurchmesser des Zentrierzapfens und dass der Hohlraum oder Innenraum der Kalotte durch einen Balg abgedichtet ist.

Schließlich ist es von Vorteil, dass die Metallschicht auf dem Zapfen eine Ni-Schicht ist, mit größerer Härte als die Metallschicht oder Ni-Schicht auf der Kugeloberfläche, wobei in letzterer Teflon mit eingearbeitet ist.

Weitere Vorteile und Einzelheiten der Erfindung sind in den Patentansprüchen und in der Beschreibung erläutert und in den Figuren dargestellt. Es zeigt:
- Figur 1: eine Schnittdarstellung der Doppelgelenkwelle mit einem in einer Zentrierkugel aufgenommenen Zentrierzapfen und einer Buchse,
- Figur 1b und 1c: eine Schnittdarstellung eines weiteren Ausführungsbeispiels einer Doppelgelenkwelle mit einem in einer Zentrierkugel aufgenommenen Zentrierzapfen und einer Buchse,
- Figur 2: eine perspektivische Darstellung der Zentrierkugel,
- Figur 3: ein weiteres Ausführungsbeispiel einer Doppelgelenkwelle mit einer Zentrierkugel, die drehfest mit dem Drehzapfen verbunden ist,
- Figur 4: die Gleitlagerbuchse gemäß Fig.1b und 1c.

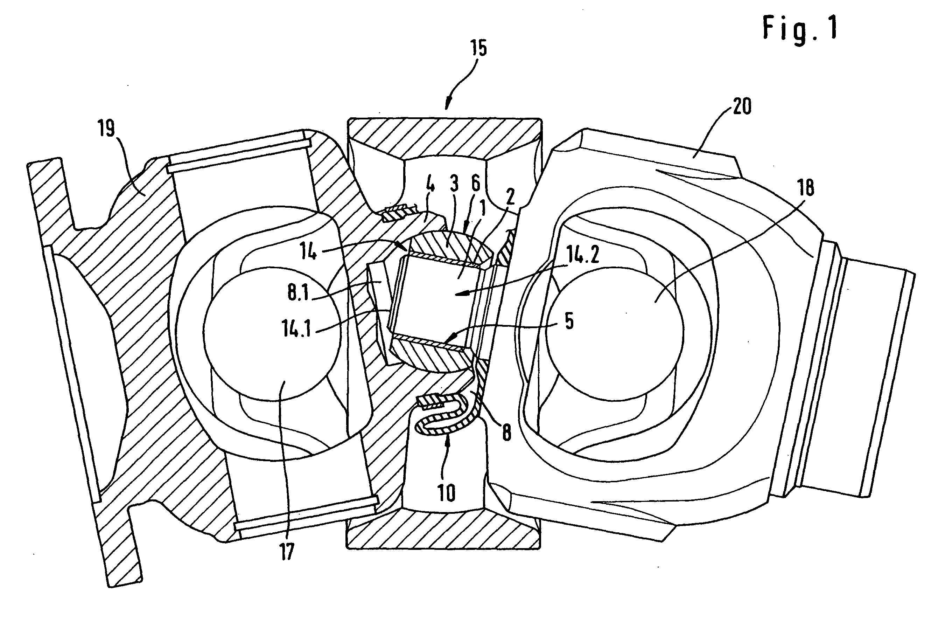

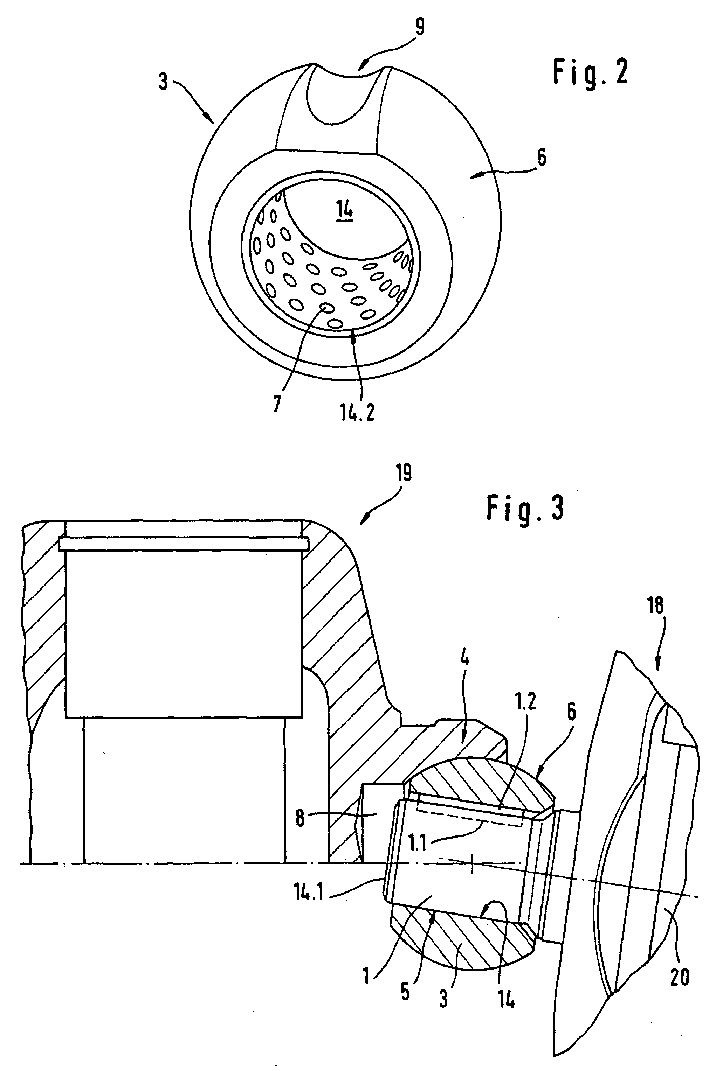

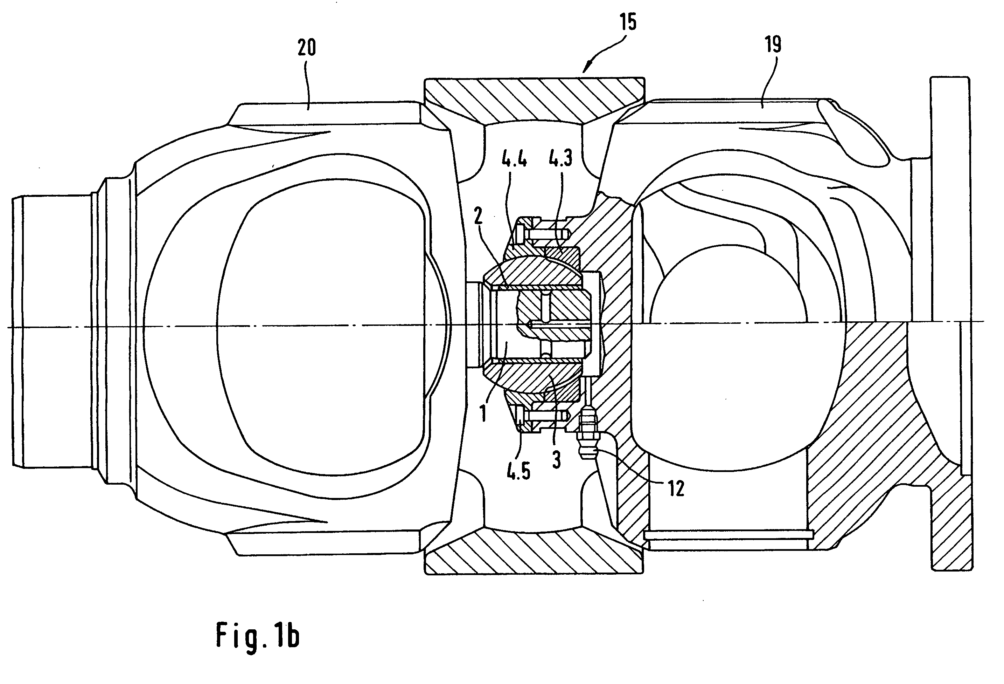

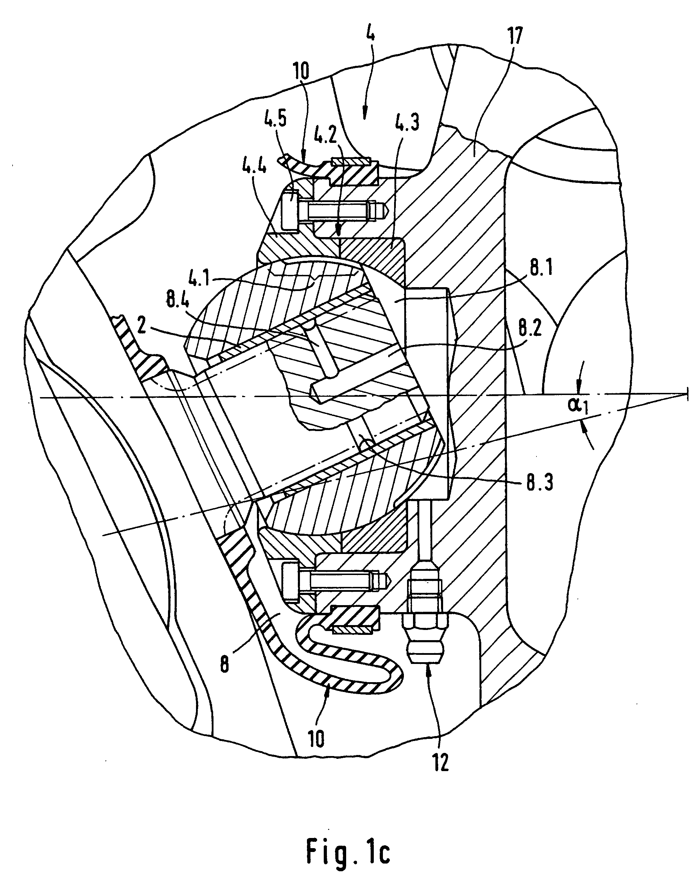

In der Zeichnung ist in Figur 1 eine schematische Darstellung einer Doppelgelenkwelle für Fahrzeuge dargestellt, die ein erstes und zweites Zapfenkreuz 17 und 18 aufweist. Das in Figur 1 dargestellte linke Zapfenkreuz 17 weist eine Kalotte 4 bzw. Kugelkalotte auf, die fester Bestandteil eines Gabelgelenks 19 ist und zur Aufnahme einer Zentrierkugel 3 dient, die wiederum mit einer Bohrung 14 zur Aufnahme eines Zentrierzapfens 1 ausgestattet ist. Der Zentrierzapfen 1 weist eine Zentrierstirnfläche 14.1 auf, die mit einem Innenraum bzw. einem Hohlraum 8 eine geschlossene Kammer bildet, die über einen Faltenbalg 10 nach außen hin abgedichtet ist.

Der Zentrierzapfen 1 ist wiederum fest an einem Gabelgelenk 20 angeordnet. Auf dem Zentrierzapfen 1 befindet sich eine beispielsweise aus Bronze gebildete Gleitlagerbuchse 2, die passgenau in die Zentrierkugel 3 eingesetzt werden kann. Die Buchse 2 weist eine Bohrung bzw. eine zylindrische Innenlagerfläche 14.2 auf.

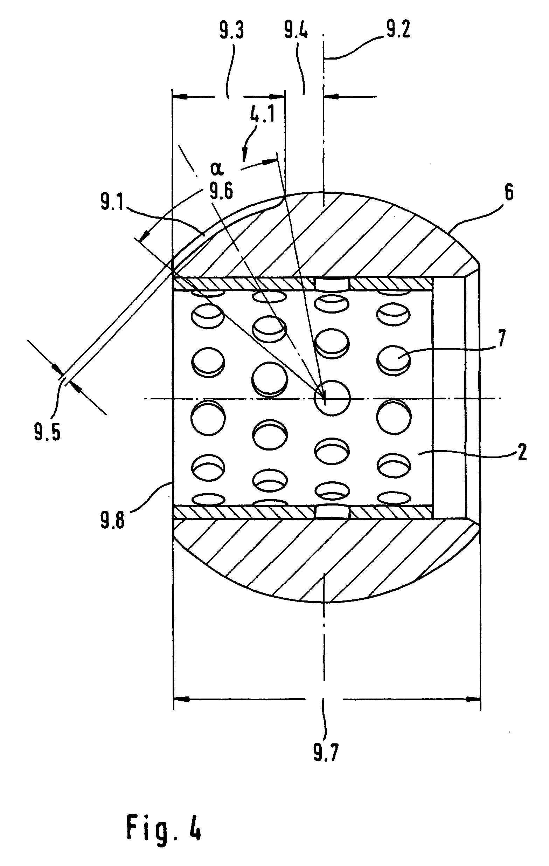

Die Gleitlagerbuchse 2 weist zahlreiche Öffnungen bzw. Durchdringungen oder Kammern bzw. Fettkammern 7 auf, in denen Schmiermittel eingebracht werden kann. Gemäß Figur 2 sind die Fettkammern 7 kreisrund ausgebildet. Sie können jedoch auch elliptisch oder rechteckförmig ausgebildet sein, wobei der Abstand zwischen den einzelnen Fettkammern 7, die gleichmäßig auf dem Innenumfang der Gleitlagerbuchse 2 verteilt sind, auch unterschiedlich groß sein kann.

Anstelle der Gleitlagerbuchse 2 mit den zahlreichen Fettkammern 7 können diese auch nur in die Innenoberfläche der Bohrung 14.2 der Gleitlagerbuchse 2 eingebracht werden. Ebenso ist es möglich, diese Fettkammern 7 auf der Außenoberfläche des Zentrierzapfens 1 vorzusehen.

Die Oberfläche des Zentrierzapfens 1 kann aus einer Chrom-Nickel-Legierung bestehen und eine wesentlich größere Härte aufweisen als die Gleitlagerbuchse 2, die im Ausführungsbeispiel aus Bronze oder auch aus einem anderen, eine geringere Härte aufweisenden Material gebildet sein kann. Beispielsweise ist es möglich, die Gleitlagerbuchse auch aus einem Kunststoffmaterial herzustellen.

Die Zentrierkugel 3 weist eine Zentrierkugelaußenoberfläche 6 auf, die ebenfalls oberflächenbeschichtet ist oder beschichtet sein kann, wobei der Schichtwerkstoff ebenfalls aus einer Chrom-Nickel-Legierung bestehen kann. Beispielsweise ist es möglich, dass die auf der Zentrierzapfenoberfläche 5 und/oder Zentrierkugeloberfläche 6 aufgebrachte Metallschicht unter Plasma bei Drücken unterhalb von 5 x 10⁻¹ mbar aufgebracht werden kann.

Die Zentrierkugeloberfläche 6, insbesondere die Zentrierzapfenoberfläche 5, kann auch aus einem Schichtaufbau bestehen, um extrem hohe Härten mit sehr guter Leiteigenschaft zu erzielen. Hierzu ist es beispielsweise möglich, die erste Schicht bzw. die Vorschicht, die auf dem Zentrierzapfen 1 aufgebracht ist, im PVCD-Verfahren, die zweite Schicht im Aufdampfverfahren und die dritte Schicht wiederum im PVCD-Verfahren aufzubringen, wobei die erste zwischen der Oberfläche 5 des Zentrierzapfens 1 und der zweiten Schicht bzw. Metallschicht vorgesehene Vorschicht eine Schichtdicke aufweist, die kleiner als 200 Å ist.

Im Ausführungsbeispiel gemäß Figur 3 fehlt beispielsweise die Gleitlagerbuchse 2. Zur Vermeidung eines Abriebs zwischen der Bohrung 14 der Kugel 4 und der Zentrierkugelaußenoberfläche 6 kann beispielsweise anstelle eines kreisrunden Querschnitts für den Zentrierzapfen 1 bzw. die Bohrung 14 auch ein anderer Querschnitt gewählt werden, so dass keine Drehbewegung des Zentrierzapfens 1 in der Bohrung 14 der Zentrierkugel 3 möglich ist. D. h. man erhält auf diese Weise eine drehfeste Verbindung zwischen Zentrierzapfen 1 und Zentrierkugel 3. Im Ausführungsbeispiel gemäß Figur 3 weist hierzu der Zentrierzapfen 1 eine Nut 1.1 zur Aufnahme einer Feder 1.2 auf. Wie bereits erwähnt, kann auf die Gleitlagerbuchse 2 gemäß Figur 1 nach einem weiteren Ausführungsbeispiel verzichtet werden. Hierzu wird die Bohrung 14 der Zentrierkugel bzw. der Gelenkkugel 3 verkleinert und die Innenoberfläche der Gelenkkugel ebenfalls beschichtet. Anstelle der in der Gleitlagerbuchse 2 vorgesehenen Fettkammern 7 werden beispielsweise auf der Zentrierzapfenoberfläche 5 eine oder mehrere Schmierrillen vorgesehen, die bei einer axialen Bewegung des Zentrierzapfens für eine sehr gute Dauerschmierung zwischen der Bohrung 14 der Zentrierkugel 3 und der Zentrierzapfenaußenoberfläche 5 sorgen.

Beispielsweise gelangt durch die Abschmierung Schmiermittel in die Zentrier- bzw. Gelenkkugel 3 und auch in die Fettkammern 7 aufweisende Gleitlagerbuchse 2. Ebenso gelangt das Schmiermittel auch zwischen die verschiedenen Flächen zwischen der Zentrierkugelaußenoberfläche 6 und der Kalotte 4.

Nach einem weiteren Ausführungsbeispiel gemäß Figur 4 kann zumindest die Zentrierkugelaußenoberfläche 6 mit mehreren mit Abstand, in vorteilhafter Weise mit gleichem Abstand, zueinander angeordneten einer oder mit zahlreichen Vertiefungen bzw. Rillen ausgestattet sein, die ebenfalls zur Aufnahme eines Schmiermittels dienen und somit die Gleiteigenschaften der Kugel innerhalb der Kalotte 4 verbessern. Die Schmiernuten 9.1 sind so angeordnet, dass im eingebauten Zustand der Gleitlagerbuchse 2 kein Schmiermittel zum Faltenbalg 10 abfließen kann. Der Faltenbalg 10 ist lediglich in Fig. 1 und Fig. 1c eingezeichnet.

Die Schmiernuten 9.1 weisen eine geringe Tiefe auf, diese kann zwischen 1,2 und 1,8 mm groß sein. Die Schmiernuten 9.1 erstrecken sich von der Stirnfläche 9.3 der Gelenkkugel bzw. Zentrierkugel 3 mit einem Abstand 9.4, der etwas kleiner ist als die Hälfte der Gesamtbreite der Gelenkkugel bzw. Zentrierkugel 3, bis kurz vor die Mittellinie 9.2, wobei der Abstand 9.4 in etwa ¼ der Gesamtlänge der Vertiefung 9.1 ausmacht.

Wie aus Fig. 4 hervorgeht, kann der Winkelbereich α, auf dem sich die Schmiernut 9.1 erstreckt, zwischen 25° und 35°, in vorteilhafter Weise 30°, groß sein. Im Ausführungsbeispiel sind sechs Schmiernuten 9.1 vorgesehen, es ist jedoch auch möglich, mehr oder weniger als sechs Schmiernuten an der Oberfläche 6 der Gelenkkugel bzw. Zentrierkugel 3 anzuordnen.

Wie aus Fig. 1c hervorgeht, haben die beiden Gabelgelenke 19, 20 ihren maximalen Auslenkwinkel α₁ von ca. 15° eingenommen. In dieser Stellung deckt der Kugelkalottenabschnitt 4.1 in einem Winkelbereich α ca. 30° und somit auch die Schmiernut 9.1 ebenfalls vollständig ab, so dass sie nur eine Verbindung zu dem Hohlraum 8.1 hat. In dieser sowie auch in jeder anderen Stellung der beiden Gabelgelenke 19, 20 hat die Schmiernut 9.1 nur eine Verbindung zu dem Hohlraum 8.1 und kann auch nur über diesen mit Schmiermittel versorgt werden, es kann also, wie bereits erwähnt, kein Schmiermittel zum Faltenbalg 10 abfließen. Die Schmiernut 9.1 ist deshalb, wie aus Fig. 4 hervorgeht, zur Stirnseite hin offen.

Die Schmiermittelversorgung erfolgt über eine Schmieröffnung oder Versorgungsöffnung, hier über einen Schmiernippel 12. Über den Schmiernippel 12 gelangt das Schmiermittel zuerst in den Hohlraum 8.1 über in der Kalotte 4 vorgesehene Bohrungen 8.2 bis 8.4, so dass die Fettkammern 7 mit Schmiermittel versorgt werden können.

Wie aus Fig. 1c hervorgeht, weist das Gabelgelenk 19 eine Kalotte 4 bzw. Kugelkalotte auf, die bei 4.2 geteilt ist und die eine erste Gleitlagerbuchse 4.3 für die Gelenkkugel aufnimmt, an die sich eine weitere Hälfte bzw. ein Gleitlager 4.4 anschließt, das über Schraubenbolzen 4.5 mit dem ersten Gleitlager 4.3 lösbar verbunden ist. Die beiden Gleitlager dienen zur Aufnahme der Gelenkkugel.

In einem weiteren nicht dargestellten Ausführungsbeispiel kann zum Beispiel die Bohrung 14 der Kugel 3 und/oder auch die Gleitlagerbuchse 2 mit rillenförmigen bzw. spiralförmig ausgebildeten Schmiernuten versehen sein. Derartige Schmiernuten können auch an der Zentrierkugelaußenoberfläche 6 vorgesehen werden.

Die beiden Zapfenkreuze 17 und 18 bzw. die zugehörigen Gabelgelenke 19 und 20 sind über ein Verbindungselement 15 ebenfalls miteinander verbunden und somit statisch bestimmt.

### Bezugszeichenliste

- 1: Zentrierzapfen
- 1.1: Nut
- 1.2: Feder
- 2: Gleitlagerbuchse
- 3: Gelenkkugel bzw. Zentrierkugel
- 4: Kugelkalotte, Kalotte
- 4.1: Kugelkalottenabschnitt
- 4.2: Teilung
- 4.3: Gleitlager
- 4.4: Gleitlager
- 4.5: Schraubenbolzen
- 5: Zentrierzapfenaußenoberfläche
- 6: Oberfläche, Zentrierkugelaußenoberfläche
- 7: Vertiefung, Fettkammer
- 8: zweiter Hohlraum, Innenraum
- 8.1: erster Hohlraum, Innenraum
- 8.2: bis 8.4 Bohrung
- 9: Schmiernut, Vertiefung, Rille
- 9.1: Vertiefungen, Schmiernut bis in etwa an die Grenze der Mittellinie 9.2
- 9.2: Mittellinie
- 9.3: Stirnfläche
- 9.4: Abstand von der Stirnfläche 9.6
- 9.5: Tiefe der Schmiernuten
- 9.6: entspricht auch dem Auslenkwinkel α ca. 30°
- 9.7: Gesamtbreite der Gelenkkugel bzw. Zentrierkugel 3
- 10: elastische Dichtung, Faltenbalg
- 12: Versorgungsöffnung; Schmieröffnung bzw. Schmierbohrung; Schmiernippel
- 13: Doppelgelenkwelle
- 14: Bohrung der Kugel 3
- 14.1: Stirnfläche von Zentrierzapfen 1
- 14.2: Bohrung der Buchse 2, Innenlagerfläche
- 15: Verbindungselement
- 17: erstes Zapfenkreuz
- 18: zweites Zapfenkreuz
- 19: erstes Gabelgelenk
- 20: zweites Gabelgelenk

## Patentansprüche

1. Doppelgelenkwelle für Fahrzeuge mit folgenden Merkmalen:
a) die Doppelgelenkwelle weist ein erstes und ein zweites Zapfenkreuz (17, 18) auf,
b) die Zapfenkreuze (17, 18) sind in einem ersten und einem zweiten Gabelgelenk (19, 20) aufgenommen,
c) die beiden Gabelgelenke (19, 20) stehen über ein Verbindungselement (15) in Antriebsverbindung,
d) das erste Gabelgelenk (19) weist eine Kugelkalotte (4) auf, die zur Aufnahme einer Zentrierkugel (3) dient,
e) die Zentrierkugel (3) ist in der am Gabelgelenk (19) vorgesehenen Kalotte (4) aufgenommen,
f) die Gelenkkugel oder Zentrierkugel (3) weist an ihrem Außenumfang eine oder mehrere Vertiefungen (9.1) auf, die sich derart an der Oberfläche (6) der Gelenkkugel (3) erstrecken, dass kein Schmiermittel aus dem ersten ins Innere des ersten Gabelgelenkes (19) reichenden Hohlraum (8.1) in den zweiten außerhalb des ersten Gabelgelenkes (19) gebildeten Hohlraum (8) gelangt, der zumindest durch eine elastische Dichtung (10) nach außen hin abgedichtet ist,
g) die in der Kalotte (4) aufgenommene Zentrierkugel (3) ist mit einer Bohrung (14) zur Aufnahme eines Zentrierzapfens (1) versehen,
h) der mit dem zweiten Gabelgelenk (20) fest verbunden ist,
i) die Bohrung (14) der Zentrierkugel (3) und/oder der Zentrierzapfen (1) und/oder eine auf dem Zentrierzapfen (1) vorgesehene Gleitlagerbuchse (2) weisen eine oder mehrere Vertiefungen (7) für Gleitmittel auf.

2. Vorrichtung nach Anspruch 1, **dadurch gekennzeichnet, dass** die Vertiefungen (9.1) der Oberfläche (6) der Gelenkkugel bzw. Zentrierkugel (3) auf einer Hälfte der Oberfläche (6) der Gelenkkugel bzw. Zentrierkugel (3) sich einenends bis zur Stirnfläche (9.3) und anderenends bis in den mittleren Bereich der Oberfläche (6) der Gelenkkugel (3) erstrecken.

3. Vorrichtung nach Anspruch 1, **dadurch gekennzeichnet, dass** zahlreiche in etwa parallel zueinander verlaufende Vertiefungen (9.1) mit etwa gleichem Abstand auf der Oberfläche (6) der Gelenkkugel bzw. Zentrierkugel (3) angeordnet sind.

4. Vorrichtung nach Anspruch 1, **dadurch gekennzeichnet, dass** die Vertiefungen (9.1) auf der Oberfläche (6) der Gelenkkugel bzw. Zentrierkugel (3) einen Winkelbereich α von ca. 20° bis 30° abdecken.

5. Vorrichtung nach Anspruch 1, **dadurch gekennzeichnet, dass** die Vertiefungen (9.1) der Oberfläche (6) der Gelenkkugel bzw. Zentrierkugel (3) und die Vertiefungen (7) in der Gleitlagerbuchse (2) über zumindest eine Versorgungsöffnung (12) mit Schmiermittel versorgt werden.

6. Vorrichtung nach Anspruch 1, **dadurch gekennzeichnet, dass** die Gleitlagerbuchse (2) zahlreiche mit Abstand zueinander angeordnete Öffnungen oder Vertiefungen oder Fettkammern (7) aufweist.

7. Vorrichtung nach Anspruch 1 oder 2, **dadurch gekennzeichnet, dass** die Kalotte (4) an ihrer Innenoberfläche und/oder die Zentrierkugel (3) in ihrer Bohrung (14) und/oder auf ihrer Zentrierkugelaußenoberfläche (6) eine oder mehrere Vertiefungen (7, 9) aufweist.

8. Vorrichtung nach einem der vorhergehenden Ansprüche, **dadurch gekennzeichnet, dass** die Gleitlagerbuchse (2) aus einem weicheren Material als die Zentrierkugel (3) gebildet ist.

9. Vorrichtung nach einem der vorhergehenden Ansprüche, **dadurch gekennzeichnet, dass** die Gleitlagerbuchse (2) aus Kunststoff, Stahl oder Bronze gebildet ist.

10. Vorrichtung nach einem der vorhergehenden Ansprüche, **dadurch gekennzeichnet, dass** der Zentrierzapfen (1) induktiv gehärtet und nach dem Härtungsvorgang angelassen ist.

11. Vorrichtung nach einem der vorhergehenden Ansprüche, **dadurch gekennzeichnet, dass** die Oberfläche (6) der Zentrierkugel (3) oberflächenbeschichtet und in die Oberfläche Teflonmaterial eingearbeitet ist.

12. Vorrichtung nach einem der vorhergehenden Ansprüche, **dadurch gekennzeichnet, dass** auf der Oberfläche bzw. Außenoberfläche (5) des Zentrierzapfens (1) eine Metallschicht unter Plasma bei Drücken unterhalb von 5 x 10⁻¹ mbar aufgebracht ist.

13. Vorrichtung nach einem der vorhergehenden Ansprüche, **dadurch gekennzeichnet, dass** die erste Schicht bzw. Vorschicht im PVCD-Verfahren, die zweite Schicht im Aufdampfverfahren und die dritte Schicht im PVCD-Verfahren aufgebracht wird, wobei die erste zwischen der Oberfläche (5) des Zentrierzapfens (1) und der zweiten Schicht bzw. Metallschicht vorgesehene Vorschicht eine Schichtdicke aufweist, die kleiner als 200 Å stark ist.

14. Vorrichtung nach einem der vorhergehenden Ansprüche, **dadurch gekennzeichnet, dass** die Zentrierkugel (3) drehfest mit der Buchse (2) und/oder dem Zentrierzapfen (1) verbunden ist.

15. Vorrichtung nach einem der vorhergehenden Ansprüche, **dadurch gekennzeichnet, dass** der Querschnitt des Zentrierzapfens (1) und der Innendurchmesser der Bohrung (14) der Buchse (2) und/oder der Bohrung der Zentrierkugel (3) unrund ist.

16. Vorrichtung nach einem der vorhergehenden Ansprüche, **dadurch gekennzeichnet, dass** die Spielpaarung zwischen der Kalotte (4) und der Kugel (3) gleich oder kleiner ist als die Spielpaarung zwischen der Bohrung der Kugel (3) und dem Außendurchmesser des Zentrierzapfens (1).

17. Vorrichtung nach einem der vorhergehenden Ansprüche, **dadurch gekennzeichnet, dass** der Hohlraum oder Innenraum (8) der Kalotte (4) durch einen Balg (10) abgedichtet ist.

18. Vorrichtung nach einem der vorhergehenden Ansprüche, **dadurch gekennzeichnet, dass** die Metallschicht auf dem Zapfen (1) eine Ni-Schicht ist, mit größerer Härte als die Metallschicht oder Ni-Schicht auf der Kugeloberfläche, wobei in letzterer Teflon mit eingearbeitet ist.

## Claims

1. A double-jointed propeller shaft for vehicles having the following features:
a) the double-jointed propeller shaft has a first and a second cross link (17, 18),
b) the cross links (17, 18) are received in a first and a second fork joint (19, 20),
c) the two fork joints (19, 20) have a drive connection via a connecting element (15),
d) the first fork joint (19) has a universal ball joint (4) which is used to receive a centering ball (3),
e) the centering ball (3) is received in the ball joint (4) provided on the fork joint (19),
f) the joint ball or centering ball (3) has one or more depressions (9.1) around its outer circumference which extend on the surface (6) of the joint ball (3) in such a way that no lubricant from the first cavity (8.1), which extends into the inside of the first fork joint (19), reaches the second cavity (8), formed outside the first fork joint (19), which is sealed to the outside by at least one elastic seal (10),
g) the centering ball (3) received in the ball joint (4) is provided with a hole (14) to receive a centering pin (1),
h) which is permanently connected to the second fork joint (20),
i) the hole (14) of the centering ball (3) and/or the centering pin (1) and/or a plain bearing bush (2) provided on the centering pin (1) has one or more depressions (7) for lubricant.

2. The device according to Claim 1, **characterized in that** the depressions (9.1) of the surface (6) of the joint ball and/or centering ball (3) extend on one-half of the surface (6) of the joint ball and/or centering ball (3) up to the face (9.3) on one side and up to the middle region of the surface (6) of the joint ball (3) on the other side.

3. The device according to Claim 1, **characterized in that** numerous depressions (9.1), which run approximately parallel to one another, are positioned at approximately equal intervals on the surface (6) of the joint ball and/or centering ball (3).

4. The device according to Claim 1, **characterized in that** the depressions (9.1) on the surface (6) of the joint ball and/or centering ball (3) cover an angular region α of approximately 20° to 30°.

5. The device according to Claim 1, **characterized in that** the depressions (9.1) of the surface (6) of the joint ball and/or centering ball (3) and the depressions (7) in the plain bearing bush (2) are supplied with lubricant via at least one supply opening (12).

6. The device according to Claim 1, **characterized in that** the plain bearing bush (2) has numerous openings or depressions or grease chambers (7) which are positioned at intervals to one another.

7. The device according to Claim 1 or 2, **characterized in that** the ball joint (4) has one or more depressions (7, 9) on its inner surface and/or the centering ball (3) has one or more depressions (7, 9) in its hole (14) and/or on its centering ball outer surface (6).

8. The device according to one of the preceding claims, **characterized in that** the plain bearing bush (2) is made of a softer material than the centering ball (3).

9. The device according to one of the preceding claims, **characterized in that** the plain bearing bush (2) is made of plastic, steel, or bronze.

10. The device according to one of the preceding claims, **characterized in that** the centering pin (1) is inductively hardened and is tempered after the hardening procedure.

11. The device according to one of the preceding claims, **characterized in that** the surface (6) of the centering ball (3) has a surface coating and Teflon material is incorporated into the surface.

12. The device according to one of the preceding claims, **characterized in that** that a metal coating is applied to the surface and/or outer surface (5) of the centering pin (1) under plasma at pressures below 5 x 10⁻¹ mbar.

13. The device according to one of the preceding claims, **characterized in that** the first coating and/or pre-coating is applied in the PVCD method, the second coating is applied in the vapor deposition method, and the third coating is applied in the PVCD method, the first pre-coating, provided between the surface (5) of the centering pin (1) and the second coating and/or metal coating, having a coating thickness which is less than 200 Å.

14. The device according to one of the preceding claims, **characterized in that** the centering ball (3) is connected to the bush (2) and/or the centering pin (1) so that they rotate together.

15. The device according to one of the preceding claims, **characterized in that** the cross-section of the centering pin (1) and the inner diameter of the hole (14) of the bush (2) and/or the hole of the centering ball (3) are non-round.

16. The device according to one of the preceding claims, **characterized in that** the pairing play between the ball joint (4) and the ball (3) is equal to or less than the pairing play between the hole of the ball (3) and the outer diameter of the centering pin (1).

17. The device according to one of the preceding claims, **characterized in that** the cavity or inner space (8) of the ball joint (4) is sealed by a bellows (10).

18. The device according to one of the preceding claims, **characterized in that** the metal coating on the pin (1) is a Ni coating having a greater hardness than the metal coating or Ni coating on the ball surface, Teflon also being incorporated into the latter.

## Revendications

1. Arbre à double joint de cardan destiné à un véhicule et présentant les caractéristiques suivantes :
a) l'arbre à double joint de cardan est muni d'un premier et d'un second croisillon de cardan (17, 18),
b) les croisillons de cardan (17, 18) sont logés dans une première et dans une seconde chape (19, 20),
c) les deux chapes (19, 20) sont en liaison d'entraînement par l'intermédiaire d'un élément de liaison (15),
d) la première chape (19), est munie d'une calotte sphérique (4), destinée à loger une bille de centrage (3),
e) la bille de centrage (3) est logée dans la calotte (4) prévue dans la chape (19),
f) sur sa périphérie, la bille d'articulation ou bille de centrage (3) est munie d'un ou de plusieurs creux (9.1), qui s'étendent en surface (6) de la bille d'articulation (3) de façon à éviter que tout produit lubrifiant ne passe de la première cavité (8.1) allant jusqu'à l'intérieur de la première chape (19) dans la seconde cavité (8), formée à l'extérieur de la première chape (19) et dont l'étanchéité vers l'extérieur est assurée par au moins un joint élastique (10),
g) la bille de centrage (3) logée dans la calotte (4) est munie d'un alésage (14) destiné à réceptionner un téton de centrage (1),
h) lequel présente une liaison fixe avec la seconde chape (20),
i) l'alésage (14) de la bille de centrage (3) et/ou le téton de centrage (1) et/ou une boîte de glissement (2) prévue sur le téton de centrage (1) est muni(e) d'un ou de plusieurs creux (7) pour un lubrifiant.

2. Dispositif selon la revendication 1, **caractérisé en ce que**, sur une moitié de la surface (6) de la bille d'articulation ou de la bille de centrage (3), les creux (9.1) de la surface (6) de la bille d'articulation ou de la bille de centrage (3) s'étendent d'une part jusqu'à la surface frontale (9.3) et d'autre part jusque dans la zone médiane de la surface (6) de la bille d'articulation (3).

3. Dispositif selon la revendication 1, **caractérisé en ce que** de nombreux creux (9.1) approximativement parallèles sont disposés à distance quasiment égale sur la surface (6) de la bille d'articulation ou de la bille de centrage (3).

4. Dispositif selon la revendication 1, **caractérisé en ce que** les creux (9.1) sur la surface (6) de la bille d'articulation ou de la bille de centrage (3) recouvrent une zone angulaire α d'environ 20° à 30°.

5. Dispositif selon la revendication 1, **caractérisé en ce que** les creux (9.1) de la surface (6) de la bille d'articulation ou de la bille de centrage (3) et les creux (7) dans la boîte de glissement (2) sont alimentés en lubrifiant par l'intermédiaire d'au moins un orifice d'alimentation (12).

6. Dispositif selon la revendication 1, **caractérisé en ce que** la boîte de glissement (2) est munie de nombreux orifices ou creux ou chambres de graissage (7) distancé(e)s entre eux (elles).

7. Dispositif selon l'une quelconque des revendications 1 ou 2, **caractérisé en ce que** la calotte (4) est munie sur sa surface interne et/ou la bille de centrage (3) est munie dans son alésage (14) et/ou sur sa surface externe d'un ou de plusieurs creux (7, 9).

8. Dispositif selon l'une quelconque des revendications précédentes, **caractérisé en ce que** la boîte de glissement (2) est conçue dans une matière plus souple que la bille de centrage (3).

9. Dispositif selon l'une quelconque des revendications précédentes, **caractérisé en ce que** la boîte de glissement (2) est conçue en matière plastique, en acier ou en bronze.

10. Dispositif selon l'une quelconque des revendications précédentes, **caractérisé en ce que** le téton de centrage (1) est trempé par induction et recuit après le procédé de trempe.

11. Dispositif selon l'une quelconque des revendications précédentes, **caractérisé en ce que** la surface (6) de la bille de centrage (3) est munie d'un revêtement de surface et **en ce que** du téflon est incorporé dans la surface.

12. Dispositif selon l'une quelconque des revendications précédentes, **caractérisé en ce qu'**une couche métallique est appliquée sous plasma sur la surface ou sur la surface extérieure (5) du téton de centrage (1), sous des pressions inférieures à 5 x 10⁻¹ mbar.

13. Dispositif selon l'une quelconque des revendications précédentes, **caractérisé en ce que** la première couche ou la couche préliminaire est appliquée par procédé PCVD, la seconde couche est appliquée par procédé de vaporisation/condensation et la troisième couche est appliquée par procédé PVDC, la couche prévue entre la surface (5) du téton de centrage (1) et la seconde couche ou couche métallique présentant une épaisseur inférieure à 200 Å.

14. Dispositif selon l'une quelconque des revendications précédentes, **caractérisé en ce que** la bille de centrage (3) est reliée avec la boîte (2) et/ou avec le téton de centrage (1) de façon résistante à la torsion.

15. Dispositif selon l'une quelconque des revendications précédentes, **caractérisé en ce que** la section transversale du téton de centrage (1) et le diamètre intérieur de l'alésage (14) de la boîte (2) et/ou de l'alésage de la bille de centrage (3) sont ovalisés.

16. Dispositif selon l'une quelconque des revendications précédentes, **caractérisé en ce que** l'appariement avec jeu entre la calotte (4) et la bille (3) est inférieur ou égal à l'appariement avec jeu entre l'alésage de la bille (3) et le diamètre extérieur du téton de centrage (1).

17. Dispositif selon l'une quelconque des revendications précédentes, **caractérisé en ce que** l'étanchéité de la cavité ou de la cavité interne (8) de la calotte (4) est assurée par un soufflet (10).

18. Dispositif selon l'une quelconque des revendications précédentes, **caractérisé en ce que** la couche métallique sur le téton (1) est une couche de Ni, de dureté supérieure à celle de la couche métallique ou couche de Ni sur la surface de la bille, du téflon étant incorporé dans la dernière.
